# FASCICULE DE BREVET EUROPEEN

(11) **EP 3 677 332 B1**
(45) Date de publication et mention de la délivrance du brevet: **06.10.2021**
(21) Numéro de dépôt: 20150109.5
(22) Date de dépôt: 02.01.2020
(51) Int. Cl.: B01J 8/00

(54) **DISTRIBUTION DE PARTICULES SOLIDES DANS UNE ENCEINTE**
VERTEILUNG VON FESTSTOFFPARTIKELN IN EINEM GEHÄUSE
DISTRIBUTION OF SOLID PARTICLES IN AN ENCLOSURE

(30) Priorité: 04.01.2019 FR 1900052
(43) Date de publication de la demande: 08.07.2020
(73) Titulaire: Petroval, 76430 Saint-Romain-de-Colbosc (FR)
(72) Inventeur: GIRARD, Olivier, 24300 ABJAT-SUR-BANDIAT (FR); GUERRAND, François, 76600 LE HAVRE (FR); STANDER, Adriaan, 76290 FONTENAY (FR); GALASSINI, Giuseppe, 00047 MARINO ROME (IT)
(74) Mandataire: Casalonga

(56) Documents cités:
- EP-A1- 0 116 246
- FR-A1- 2 949 755
- US-A- 4 437 613
- US-A- 5 372 467

## Description

L'invention concerne la distribution de particules solides dans une enceinte, et en particulier dans un réacteur.

Il est connu de charger des réacteurs, notamment de type chimique, électrochimique, pétrolier ou pétrochimique, avec des particules solides à l'état divisé. Ces particules peuvent par exemple se présenter sous forme de billes, de grains, de cylindres, de pastilles, de bâtonnets ou de toute autre forme et ont en général des dimensions relativement faibles.

Les particules peuvent être en particulier des grains de catalyseurs solides, généralement extrudés réalisés soit sous forme régulière, soit sous forme de bâtonnets mono ou multilobes, dont les dimensions peuvent varier selon les cas de quelques dixièmes de millimètres à quelques centimètres.

On cherche à charger dans un espace réduit et en un temps réduit un grand nombre de particules solides de façon homogène et la plus uniforme possible.

C'est à cette application, dite de « chargement dense », de grains de catalyseurs dans un réacteur chimique que l'on se référera plus particulièrement dans la suite de la présente description. Par « chargement dense », on entend ici un chargement par effet de pluie effectué de façon à concilier espace réduit, temps de chargement faible, densité élevée, homogénéité et uniformité.

Mais le dispositif décrit peut plus généralement trouver des applications dans le cadre d'un chargement de particules solides dans un réacteur ou autre enceinte cylindrique comme par exemple le dispositif, décrit par FR2949755, pour la distribution de particules solides par un système rotatif avec des lames de distribution pivotant sur leurs côtés.

On connaît un certain nombre de procédés et de dispositifs permettant d'augmenter la densité d'un lit fixe de particules de catalyseur dans un réacteur chimique.

On pourra citer par exemple le document WO 2010/076522 (Cottard et al.). Le dispositif décrit, comprenant un arbre tournant et des éléments déflecteurs est avantageux en ce sens qu'il peut être introduit dans le réacteur via un orifice de relativement faible section, les éléments déflecteurs semi-rigides se dressant ensuite lors de la rotation de l'organe tournant.

Les dispositifs du type de celui décrit dans le document WO 2010/076522, ont en commun l'introduction des particules à charger par le sommet du réacteur et la collision des particules individuelles, lors de leur chute, avec des déflecteurs mécaniques fixes ou mobiles, provoquant une déviation aléatoire des dites particules. Idéalement, les particules ainsi détournées de leur trajet de chute verticale tombent individuellement et librement par effet de pluie sur l'ensemble de la surface du front de remplissage où elles forment un dépôt dense et homogène.

Classiquement, le dispositif de distribution est installé dans une ouverture de remplissage du réacteur situé en haut du réacteur et au centre du réacteur.

L'installation dans le réacteur d'un tel système de distribution, incluant notamment le dispositif de distribution et les supports de sonde, peut néanmoins être relativement délicate à effectuer, notamment du fait des poussières générées.

La fermeture du réacteur peut en outre être difficile à mener en toute sécurité.

Pour ces raisons environnementales et de sécurité opératoire, et parfois pour d'autres raisons suivant les applications, la Demanderesse a donc envisagé de limiter le diamètre de l'orifice d'introduction du dispositif de chargement.

Il pourrait être envisagé de faire réaliser les lanières dans un matériau plus souple pour limiter l'encombrement lors de l'introduction du dispositif, mais le chargement risque alors d'être insatisfaisant faute de distribution efficace des particules solides.

Il existe donc un besoin pour un système de distribution de particules solides apte à être introduit dans le réacteur via un orifice de relativement faible section tout en assurant un chargement relativement dense.

Il est proposé un dispositif de distribution de particules solides pour charger en particules solides une enceinte, par exemple un réacteur, comprenant :
- une trémie d'alimentation en particules solides, définissant un jeu d'au moins une ouverture d'évacuation des particules hors de la trémie sous l'effet de la gravité,
- un organe tournant et un organe moteur couplé audit organe tournant pour entrainer en rotation ledit organe tournant autour d'un axe de rotation ayant une direction avec en conditions d'utilisation une composante suivant la direction du vecteur de gravité, par exemple un axe de rotation parallèle au vecteur gravité,
- en aval du jeu d'au moins une ouverture de la trémie d'alimentation, un jeu d'au moins un élément déflecteur, chaque élément déflecteur s'étendant suivant sa direction longitudinale entre une première et une deuxième extrémité, et étant porté par ledit organe tournant à sa première extrémité.

Selon l'invention :
- au moins un (et de préférence chaque) élément déflecteur dudit jeu est rigide et est monté pivotant sur l'organe tournant à sa première extrémité,
- le dispositif de distribution comprend en outre des moyens de déploiement actionnables à distance agencés pour entrainer au moins un élément déflecteur monté pivotant sur l'organe tournant, de façon à le faire pivoter d'une position d'introduction dans l'enceinte, dans laquelle sa direction longitudinale forme un premier angle avec la direction de l'axe de rotation, à une position de déviation des particules, dans laquelle sa direction longitudinale forme un deuxième angle avec la direction de l'axe de rotation, le deuxième angle étant strictement supérieur au premier angle et étant imposé via les moyens de déploiement indépendamment de la vitesse de rotation dudit organe tournant.

Ainsi, plutôt que des lanières souples ou semi-rigides dont l'extrémité est rigidement fixée à l'organe tournant, relativement encombrantes lorsque la vitesse de rotation est nulle, on prévoit au moins un élément déflecteur rigide, au moins une liaison articulée entre la première extrémité dudit élément déflecteur rigide et ledit organe tournant ainsi que des moyens de déploiement dudit élément déflecteur. En actionnant ces moyens de déploiement, on peut faire pivoter cet au moins un élément déflecteur lorsqu'il est déjà à l'intérieur de l'enceinte de façon à écarter la deuxième extrémité de l'axe de rotation.

Le dispositif de distribution décrit ci-dessus est en outre avantageux en ce sens qu'en fonctionnement, la vitesse de rotation n'a aucun effet sur l'angle entre cet au moins un élément déflecteur et l'axe de rotation. Dit autrement, cet angle est imposé via les moyens de déploiement, indépendamment de la vitesse angulaire. En particulier, cet angle peut être ajusté y compris en l'absence de toute rotation. En d'autres termes, les moyens de déploiement sont totalement indépendants du moteur, et distincts de celui-ci. Ceci permet de mieux maîtriser le chargement, dans la mesure où la vitesse de rotation influe sur moins de paramètres, a priori seulement sur le taux de rebonds des particules tombantes (on parle par abus de langage de perméabilité).

Le jeu d'au moins un élément déflecteur peut comprendre un seul élément déflecteur, ou, avantageusement, une pluralité d'éléments déflecteurs qui peuvent avoir des longueurs différentes.

Dans ce dernier cas, les moyens de déploiement peuvent être agencés pour faire pivoter tous les éléments déflecteurs de ladite pluralité, avantageusement simultanément.

Alternativement, les moyens de déploiement peuvent être conformés pour faire pivoter un ou plusieurs éléments déflecteurs indépendamment des autres éléments déflecteurs de ladite pluralité.

Le dispositif de chargement peut comprendre en outre un jeu d'au moins un élément déflecteur supplémentaire, indépendant des moyens de déploiement. Ce jeu d'au moins un élément déflecteur supplémentaire peut par exemple se dresser grâce à la force centrifuge générée par la rotation de l'organe tournant.

Dans un mode de réalisation, le dispositif de distribution peut être agencé pour que ledit au moins un élément déflecteur monté pivotant puisse avoir, lorsque la vitesse de rotation de l'organe tournant est nulle et l'axe de rotation vertical, seulement deux positions d'équilibre, correspondant aux premiers et deuxième angles. Dit autrement, les moyens de déploiement ne peuvent maintenir ledit au moins un élément déflecteur monté pivotant dressé qu'à une seule position angulaire.

Dans un autre mode de réalisation, le dispositif de distribution peut être agencé pour que les moyens de déploiement soient aptes à retenir ledit au moins un élément déflecteur monté pivotant à au moins une position intermédiaire, chaque position intermédiaire correspondant à un angle strictement supérieur au premier angle et strictement inférieur au deuxième angle. Dit autrement, les moyens de déploiement peuvent permettre d'ajuster l'angle entre ledit au moins un élément déflecteur monté pivotant et l'axe de rotation, permettant ainsi de mieux maîtriser encore le chargement.

Selon l'invention au moins un élément déflecteur est rigide. L'invention permet ainsi de concilier compacité lors de l'introduction du jeu d'au moins un élément déflecteur et qualité du chargement, car les particules peuvent rebondir relativement loin.

Il n'est cependant pas exclu de prévoir en outre au moins un élément déflecteur, et éventuellement plusieurs éléments déflecteurs, en matériau semi-rigide ou souple.

Dans un mode de réalisation, on pourrait prévoir en outre au moins un élément déflecteur rigide au niveau de la première extrémité et plus souple au niveau de la deuxième extrémité. Cette partie plus souple peut apporter un effet de fouet lorsque cet élément déflecteur est entrainé en rotation suffisamment rapidement.

Par exemple, au moins un élément déflecteur peut être réalisé en un matériau rigide sur les deux tiers de la longueur, et en un matériau flexible sur le tiers restant, à son extrémité libre.

Par « actionnable à distance », on entend actionnable depuis l'extérieur de l'enceinte. Les moyens de déploiement peuvent par exemple coopérer avec un élément mécanique, par exemple une tige, dont une partie peut être encore à l'extérieur de l'enceinte lorsque le jeu d'élément(s) déflecteur(s) est à l'intérieur. Dans un autre mode de réalisation, les moyens de déploiement peuvent comprendre des moyens de réception sans fil, pour recevoir des messages de commande émis par des moyens d'émission situés à l'extérieur de l'enceinte.

Par exemple, les moyens de déploiement peuvent comprendre au moins un moteur pas à pas, un microcontrôleur pour piloter ce moteur, et des moyens de réception sans fil.

Selon un autre exemple, avantageux en termes de robustesse, les moyens de déploiement peuvent comprendre un organe de tringlerie comprenant une première tige s'étendant vers le haut de trémie (en conditions d'utilisation), avantageusement sur une hauteur suffisante pour permettre sa manipulation depuis l'extérieur de l'enceinte lorsque le(s) élément(s) déflecteur(s) sont reçus dans l'enceinte, et au moins une deuxième tige, montée articulée par rapport à la première tige (directement ou via d'autres éléments), et coopérant avec au moins un élément déflecteur.

Un organe de tringlerie comprend plusieurs tiges articulées les unes aux autres, et en manipulant ainsi l'une de ces tiges, dite première tige, depuis l'extérieur de l'enceinte, on peut entraîner au moins une autre tige en mouvement, et in fine, au moins un élément déflecteur.

Avantageusement, la différence entre le premier angle et le deuxième angle peut être supérieure ou égale à 30°, avantageusement supérieure ou égale à 60°.

Avantageusement, la différence entre le premier angle et le deuxième angle peut être inférieure ou égale à 100°, avantageusement inférieure ou égale à 95° ou 90°.

Avantageusement, le premier angle peut être compris entre 0° et 40° ou 30°, ces valeurs étant incluses, avantageusement entre 0° et 20°, ces valeurs étant incluses. Par exemple le premier angle peut être compris entre 0° et 5°, ces valeurs étant incluses.

Avantageusement, le deuxième angle peut être compris entre 45° et 100°, ces valeurs étant incluses, avantageusement entre 60 et 95°, ces valeurs étant incluses. Par exemple le deuxième angle peut être compris entre 75° et 90°, ces valeurs étant incluses.

Dans un mode de réalisation, le jeu d'au moins une ouverture de la trémie d'alimentation peut être conformé de façon asymétrique par rapport à l'axe de rotation, définissant au plus un plan de symétrie passant par l'axe de rotation.

Ce jeu d'au moins une ouverture peut être conformé de sorte que, pour au moins un plan normal à l'axe de rotation et situé sous le jeu d'au moins une ouverture (avantageusement entre ce jeu d'au moins une ouverture et le jeu d'au moins un élément déflecteur), le débit de particules tombantes au travers d'un premier secteur angulaire dans ledit plan et dont le sommet est sur l'axe de rotation soit strictement plus élevé que le débit de particules tombantes au travers d'un deuxième secteur angulaire dans ce plan et dont le sommet est sur l'axe de rotation, le premier et le deuxième secteur angulaire ayant une même valeur d'angle et étant disjoints.

La distribution étant assymétrique, on pourra disposer ce dispositif de façon excentrée dans l'enceinte sans que cela soit préjudiciable à la qualité du chargement.

Dans un mode de réalisation, le dispositif de chargement peut être agencé de sorte que l'organe tournant ait un mouvement continu, et à vitesse de rotation constante sur plusieurs tours.

Alternativement, l'organe moteur peut être agencé pour que l'organe tournant auquel il est couplé effectue un mouvement avec des variations de vitesse angulaire sur une plage angulaire de 360° ou moins, par exemple un mouvement oscillant, avec des changements de sens de rotation.

Le jeu d'au moins un élément déflecteur peut être réparti de façon régulière autour de l'axe de rotation, ou de façon irrégulière.

Par exemple, le jeu d'au moins un élément déflecteur peut être agencé de sorte que lorsque dressé par rapport à l'axe de rotation, les projections dudit jeu dans un plan normal à l'axe de rotation de l'organe tournant ont une distribution asymétrique autour dudit axe de rotation, avec au plus un plan de symétrie passant par l'axe de rotation.

Alternativement, le jeu d'au moins un élément déflecteur peut être agencé de sorte que lorsque dressé par rapport à l'axe de rotation, les projections dudit jeu dans un plan normal à l'axe de rotation de l'organe tournant ont une distribution avec au moins deux plans de symétrie passant par l'axe de rotation.

Par ailleurs, le jeu d'au moins une ouverture de la trémie d'alimentation peut être conformé de façon asymétrique par rapport à l'axe de rotation, définissant au plus un plan de symétrie passant par l'axe de rotation.

Alternativement, le jeu d'au moins une ouverture de la trémie d'alimentation peut être conformé de façon symétrique par rapport à l'axe de rotation, définissant au moins deux plan(s) de symétrie passant par l'axe de rotation.

Lorsque le dispositif de chargement présente ainsi des asymétries, on peut prévoir de le déporter relativement à un axe central vertical de l'enceinte, permettant ainsi de libérer de l'espace pour d'autres équipements, notamment des capteurs. Le dispositif de distribution peut ainsi être utilisé pour charger des enceintes de faible diamètre.

En prévoyant en outre des vitesses de rotation sur une courte plage angulaire, puisqu'un mouvement oscillant de va-et-vient impose des passages par des vitesses de rotation nulles, on favorise les déviations des particules suivant la plage angulaire sur laquelle les éléments déflecteurs sont le plus présents.

A contrario, un dispositif de distribution avec un jeu d'au moins une ouverture de la trémie d'alimentation et un jeu d'au moins un élément déflecteur régulièrement répartis, pourra avantageusement être installé sur un axe vertical central de l'enceinte.

Chaque élément déflecteur peut par exemple occuper une plage angulaire entre 1° et 30°, avantageusement entre 5° et 20°, par exemple de l'ordre de 10°.

Dans le cas d'un dispositif de distribution asymétrique, destiné à être installé à une position excentrée, les éléments déflecteurs peuvent être répartis sur une plage angulaire restreinte seulement, par exemple une plage s'étendant sur moins de 320°, avantageusement sur moins de 280°, 180° ou de 120°, mais avantageusement sur plus de 5°.

Les éléments déflecteurs peuvent être régulièrement répartis au sein de cette plage angulaire restreinte, ou non.

Les éléments déflecteurs répartis sur cette plage angulaire restreinte peuvent être réalisés dans des matériaux identiques, ou non.

Les éléments déflecteurs répartis sur cette plage angulaire restreinte peuvent avoir une longueur (suivant la direction radiale) identique, ou non.

Avantageusement, la pluralité d'éléments déflecteurs peut comprendre au moins un élément déflecteur court et au moins un élément déflecteur long, chaque élément déflecteur long ayant une longueur suivant la direction radiale plus élevée que la longueur d'un élément déflecteur court.

Dans un mode de réalisation, la pluralité d'éléments déflecteurs répartis seulement sur la plage angulaire restreinte peut comprendre deux éléments déflecteurs courts aux extrémités respectives de cette plage angulaire restreinte et au moins un élément déflecteur long entre ces deux éléments déflecteurs courts.

Dans un autre mode de réalisation, on peut prévoir entre quatre et douze éléments déflecteurs répartis sur 360°. Par exemple, le jeu d'éléments déflecteurs peut comprendre des éléments déflecteurs de longueurs variées.

L'invention n'est pas limitée à une forme particulière des éléments déflecteurs.

Les éléments déflecteurs peuvent être réalisées par exemple en plastique rigide, par exemple en PVC (pour Polychlorure de Vinyle) en caoutchouc, en caoutchouc armé, ou autre.

En particulier, on pourra prévoir une âme aluminium et un enrobage ou une matrice de caoutchouc.

Dans le cas d'un mouvement oscillant, un tel mouvement de va-et-vient peut avantageusement être périodique, c'est-à-dire que le mouvement peut être identique pendant plusieurs secondes, avantageusement pendant plusieurs minutes.

La période peut être de l'ordre de quelques fractions de seconde, par exemple de l'ordre du centième ou du dixième de seconde, ou bien encore de l'ordre de la seconde par exemple.

Dans le cas d'un mouvement avec une vitesse de rotation variable, l'organe moteur peut comprendre un moteur piloté pour effectuer un mouvement avec des variations de vitesse angulaire sur une plage angulaire de 360° ou moins, par exemple un mouvement oscillant. Le dispositif peut alors comprendre des moyens de traitement, du type microcontrôleur par exemple, pour piloter le moteur.

L'organe moteur peut comprendre un moteur électrique, par exemple un moteur pas à pas.

Les moyens de traitement pour piloter le moteur électrique, peuvent être programmés pour piloter le moteur électrique de façon à lui imposer un mouvement oscillant. Ces moyens de traitement peuvent être embarqués avec le moteur, ou bien rester en dehors du réacteur.

Dans un autre mode de réalisation, l'organe moteur peut comprendre un moteur piloté pour effectuer un mouvement de rotation continu, par exemple un moteur électrique ou autre, et des éléments de conversion du mouvement de rotation continu du moteur en un mouvement avec des variations de vitesse angulaire sur une plage angulaire de 360° ou moins, par exemple un mouvement oscillant limité à une plage angulaire de 360° ou moins, avantageusement de 350° ou moins. Ces éléments de conversion peuvent coopérer avec le moteur d'une part et avec l'organe tournant d'autre part. Ces éléments de conversion peuvent par exemple comprendre un galet, une came, ou autre, coopérant avec un arbre du moteur et avec l'organe tournant.

En particulier, les éléments de conversion peuvent comprendre un galet excentrique avec une patte déportée ayant à son extrémité un pion positionné dans une ouverture de façon à transformer le mouvement rotatif en un mouvement oscillant, à la manière d'une horloge à balancier.

L'organe moteur peut comprendre un moteur pneumatique avec un mouvement mécanique.

Dans le cas d'un dispositif de distribution sans asymétries, l'organe tournant peut par exemple être d'une seule pièce avec le rotor d'un moteur. Bien entendu, on peut aussi prévoir des éléments entre le moteur et l'organe tournant, par exemple des engrenages, par exemple des éléments transformant le mouvement de rotation continu du moteur en un autre mouvement de rotation continu.

L'axe de rotation et la trémie d'alimentation peuvent par exemple être coaxiaux, ou non. En particulier, dans le cas d'un jeu d'au moins une ouverture asymétrique, on peut prévoir un axe de rotation déporté par rapport à la ou les ouverture(s) de ce jeu.

Le dispositif de distribution peut comprendre un arbre tournant coopérant ou d'une seule pièce avec l'organe moteur et/ou l'organe tournant.

Cet arbre peut être reçu dans la trémie d'alimentation ou non. On pourra par exemple prévoir une trémie d'alimentation légèrement déportée par rapport à l'arbre.

Les éléments déflecteurs peuvent être fixés à des hauteurs différentes les uns des autres, par exemple sur plusieurs étages, ou non.

Dans le cas d'éléments déflecteurs répartis sur plusieurs étages, on pourra prévoir une répartition en quinconce d'un étage à l'autre, ou non.

Il est en outre proposé un ensemble comprenant une enceinte et un dispositif tel que décrit ci-dessus avec l'organe tournant et le jeu d'au moins un élément déflecteur introduits dans l'enceinte.

Dans un mode de réalisation, l'enceinte définissant lorsque posée sur un sol horizontal un axe central vertical, le dispositif tel que décrit ci-dessus peut être installé dans ladite enceinte à un emplacement excentré par rapport audit axe central vertical, ou non.

L'enceinte peut être un réacteur, par exemple de type chimique, pétrochimique, électrochimique, pétrolier, ou autre.

Le réacteur peut être adapté pour contenir des réactifs et produits d'une réaction catalytique au cours de cette réaction. On parle alors de réacteur catalytique.

L'enceinte peut présenter dans sa partie supérieure un orifice de même diamètre qu'un diamètre maximal de l'enceinte, ou avantageusement de plus faible diamètre.

Le diamètre maximal de l'enceinte peut être de l'ordre de quelques mètres, ou alternativement de l'ordre du mètre ou moins.

Le diamètre de l'orifice peut par exemple être de l'ordre de quelques mètres, du mètre ou du décimètre.

Il est en outre proposé un procédé d'installation d'un dispositif de distribution de particules solides tel que décrit ci-dessus dans une enceinte, par exemple un réacteur, définissant un orifice dans sa partie supérieure, dans lequel
- on fait passer par ledit orifice au moins l'organe tournant et le jeu d'au moins un élément déflecteur comprenant au moins un élément déflecteur rigide en position d'introduction dans l'enceinte, via cet orifice défini dans la partie supérieure de l'enceinte, et
- on actionne à distance les moyens de déploiement pour entrainer au moins un élément déflecteur monté pivotant sur l'organe tournant, de façon à le faire pivoter de la position d'introduction dans l'enceinte, à la position de déviation des particules.

Cet orifice peut dans un mode de réalisation présenter des dimensions relativement réduites, par exemple de l'ordre du décimètre, et/ou être excentré.

L'invention a enfin pour objet une méthode de chargement de particules solides dans une enceinte, de préférence un réacteur catalytique. Ladite méthode comprend :
a) l'installation dans l'enceinte d'un dispositif de distribution tel que décrit ci-avant, via une ouverture de l'enceinte définie dans sa partie supérieure; puis
b) l'entrainement en rotation de l'organe tournant dudit dispositif ; et
c) le chargement des particules en les introduisant dans la trémie d'alimentation du dispositif, tout en maintenant l'organe tournant en rotation.

Selon un mode de réalisation préféré, l'organe tournant effectue un mouvement oscillant (c'est-à-dire, un mouvement de va et vient) avec des inversions de sens de rotation aux extrémités d'une plage angulaire étendue sur 350° ou moins, de préférence 330° ou moins, plus préférentiellement 320° ou moins, mieux 310° ou moins, et mieux encore 270° ou moins.

Dans la présente demande les termes « haut » « bas » « supérieur « inférieur » « vertical » « horizontal », « latéral » « dessus » « dessous » etc. sont définis au sens classique de ces termes (c'est-à-dire que la direction verticale et la direction du vecteur gravité, ce vecteur gravité étant orienté du haut vers le bas), pour une enceinte placée dans des conditions normales d'utilisation, c'est-à-dire avec son axe longitudinal orienté suivant la direction du vecteur gravité. Bien entendu, l'objet revendiqué est susceptible d'être orienté différemment, notamment lors de son transport.

De manière générale, dans la présente demande, par « un », on entend « un ou davantage ».

En particulier, l'invention peut trouver une application dans les réacteurs de faibles dimensions, par exemple de quelques dizaines de centimètres de haut et avec une ouverture de quelques centimètres de diamètre.

L'invention n'est toutefois pas limitée à cette application. On pourra par exemple prévoir un réacteur de plusieurs mètres de hauteur et de diamètre.

L'invention sera mieux comprise en référence aux figures, lesquelles illustrent des modes de réalisation non limitatifs.
[FIG 1] représente schématiquement un ensemble comprenant un réacteur et d'un exemple de dispositif de distribution de particules solides selon l'art antérieur.
[FIG 2] est une vue en perspective et schématique d'une partie d'un exemple de dispositif de distribution de particules solides selon un mode de réalisation de l'invention, avec les éléments déflecteurs en position d'introduction dans l'enceinte.
[FIG 3] est une vue en perspective et schématique d'une partie de l'exemple de dispositif de distribution de particules solides de la figure 2, avec les éléments déflecteurs en position de déviation des particules.
[FIG 4] est une vue en coupe représentant l'exemple de dispositif de distribution des figures 2 et 3.
[FIG 5] est une vue en perspective et schématique d'un exemple de couvercle de réacteur muni d'un orifice pour le passage d'un dispositif de distribution selon un mode de réalisation de l'invention.

Des références identiques peuvent être utilisées d'une figure à l'autre pour désigner des éléments identiques ou similaires.

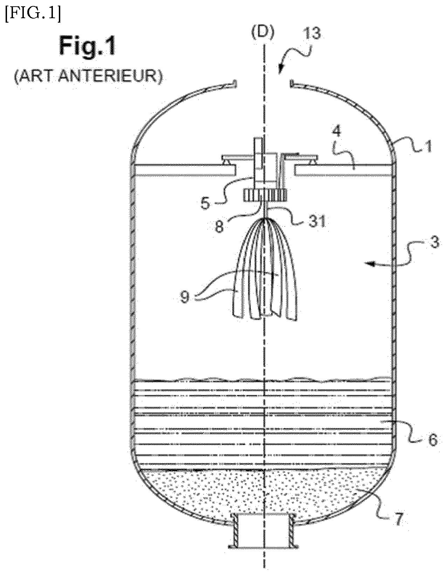

En référence à la figure 1, un réacteur 1 définit une ouverture 13, dite orifice, pour le passage notamment d'un dispositif de distribution 3 de particules solides 6, 7.

Le dispositif de distribution 3 peut par exemple être du type de celui décrit dans le document WO 2010/076522.

Dans l'exemple représenté, le dispositif de distribution repose sur un plateau 4 du réacteur 1, grâce à des bras.

Le dispositif 3 comporte en outre des lanières souples ou semi-rigides 9 pour mieux répartir les particules solides. Ces lanières 9 sont fixées chacune par une extrémité à un arbre 31 s'étendant le long d'un axe vertical (D) au travers d'une trémie 5 d'alimentation en particules solides.

L'orifice 13 doit être suffisamment large pour laisser passer l'ensemble des lanières 9.

La trémie 5 peut être raccordée à une réserve de particules solides non représentée, de façon connue en soi.

Lors du chargement, les particules solides s'écoulent via des ouvertures 8 définie à une extrémité de la trémie, situées au-dessus des lanières 9.

En outre, l'arbre 31 est entraîné en rotation par un moteur non représenté, de sorte que les lanières s'écartent angulairement de l'arbre.

Les particules chutant depuis la trémie 5 sont susceptibles de rebondir sur ces lanières, et d'être ainsi déviées de leur trajectoire. Ces déviations relativement aléatoires peuvent permettre d'assurer un chargement dense en particules solides.

Le dispositif de distribution 3 permet le chargement du réacteur 1 en billes inertes 6, et également en particules de catalyseur 7.

Par produits chargés dans le réacteur, ou chargement du réacteur, on entend les particules solides distribuées dans le réacteur par le dispositif de distribution, par exemple les lits 6, 7, de la figure 1, les réactifs et produits au sens chimique du terme, et/ou autre.

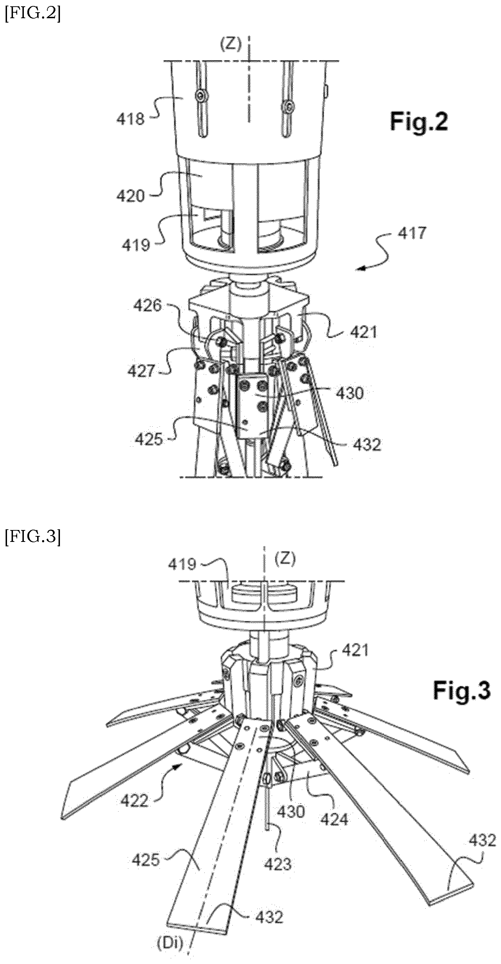

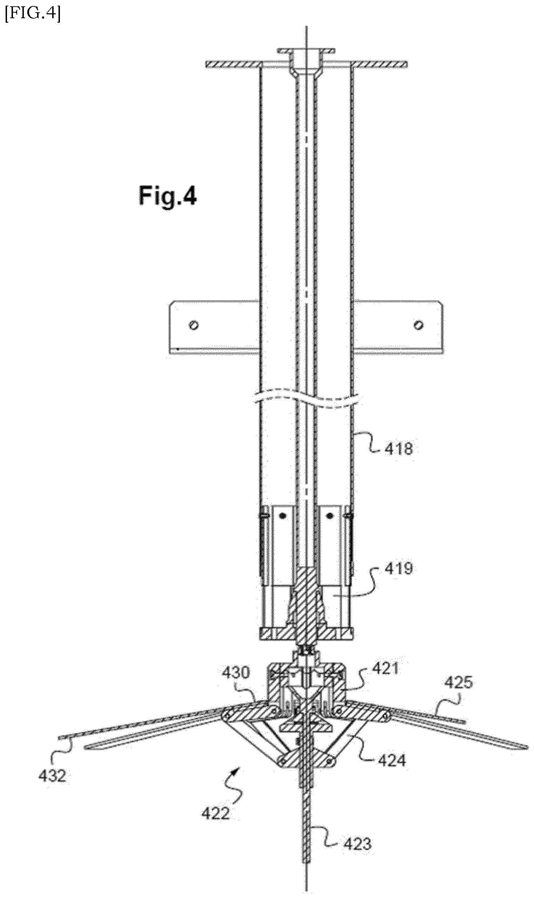

En référence aux figures 2, 3 et 4, un dispositif de distribution 417 comprend une trémie 418 définissant plusieurs, ici quatre, ouvertures latérales 419 définies dans les parois latérales de la trémie. Le fond de la trémie est plein à l'exception d'une ouverture pour le passage d'éléments mécaniques tournants.

Dans cet exemple, chaque ouverture 419 est équipée d'un volet obturant 420, monté coulissant sur des rails verticaux. La section efficace de chaque ouverture 419 peut donc être ajustée, de sorte que le jeu d'ouvertures 419 peut être réparti de façon asymétrique sur la périphérie de la trémie, de façon à favoriser l'évacuation des particules contenues dans la trémie suivant certaines directions.

Sous ces ouvertures 419, des éléments déflecteurs 425 en plastique rigide sont montés sur un élément tournant 421.

Cet élément tournant 421 coopère via des moyens de conversion non référencés avec un arbre traversant la trémie, positionné de façon centrale par rapport à la trémie, et entrainé en rotation par un moteur non représenté, autour d'un axe (z).

Ces moyens de conversion, comprenant notamment un galet, permettent de transformer le mouvement de rotation continu de l'arbre en un mouvement oscillant de l'élément tournant 421.

Chaque élément déflecteur s'étend longitudinalement entre une première extrémité 430 et une deuxième extrémité 432, suivant sa propre direction longitudinale. On a représenté sur la figure 3 une droite (Di) parallèle à la direction longitudinale attachée à l'élément déflecteur référencé 425.

A l'extrémité 430 de chaque élément déflecteur 425, une articulation 426, 427 définit une liaison pivot entre cet élément déflecteur et l'élément tournant 421.

L'autre extrémité 432 est libre.

Plus précisément, deux flasques 427 en regard l'une de l'autre sont solidarisées par des vis à l'élément déflecteur. Ces flasques 427 définissent des orifices pour recevoir une tige 426 traversant par ailleurs un alésage défini dans l'élément tournant 421.

Ainsi, grâce à cette liaison pivot, les éléments déflecteurs 425 peuvent passer d'une position d'introduction dans l'enceinte, comme illustré sur la figure 2, à une position déployée, comme illustré sur la figure 3.

Dans ce mode de réalisation, ce passage de l'une à l'autre positions est effectué grâce à un organe de tringlerie 422. Cet organe comprend plusieurs tiges articulées les unes aux autres, dont une tige centrale verticale 423 et des tiges radiales 424.

Les tiges radiales 424 sont articulées aux éléments déflecteurs 245, et l'organe de tringlerie 422 est agencé de sorte qu'un mouvement vertical de la tige centrale 423 entraine en mouvement les tiges radiales 424 et donc les éléments déflecteurs 425, à la manière d'un parapluie.

Cet organe de tringlerie, fonctionnant à la manière d'un parapluie peut permettre de dresser en même temps l'ensemble des éléments déflecteurs.

On peut dresser les éléments déflecteurs installés dans l'enceinte préalablement au démarrage du moteur.

L'influence de la vitesse de rotation sur l'angle des éléments déflecteurs est nulle. La vitesse de rotation peut ainsi affecter la perméabilité aux particules, indépendamment de cet angle entre l'axe de rotation et la direction longitudinale attachée à un élément déflecteur.

Avantageusement, l'organe de tringlerie peut être conformé de sorte que la position angulaire d'au moins un élément déflecteur (par exemple de l'ensemble des éléments déflecteurs, ou bien encore de chaque élément déflecteur individuellement) puisse être réglable. Dans l'exemple des figures 2, 3 et 4, les éléments déflecteurs ont des longueurs variables, de façon à privilégier une direction de remplissage de l'enceinte, ce dispositif 417 étant destiné à un positionnement excentré.

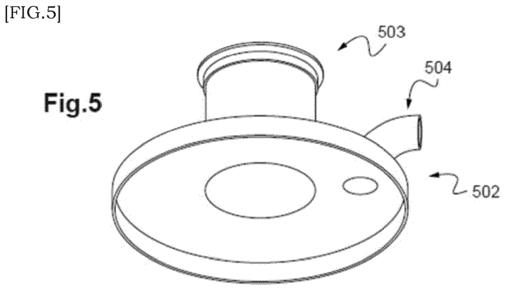

En référence à la figure 5, on a représenté un exemple de couvercle 502 destiné à recouvrir un corps cylindrique de réacteur non représenté.

Ce couvercle 502 définit un petit nombre de piquages, ici deux 503, 504. L'un 503 correspond au passage du dispositif de chargement, tandis que l'autre 504 peut correspondre à une évacuation d'air, au passage d'un dispositif de sonde, ou autre.

De par la compacité du dispositif de chargement lors de son introduction dans l'enceinte, il est ainsi possible de limiter davantage les nuisances occasionnées par les poussières lors du chargement.

## Revendications

1. Dispositif de distribution (417) de particules solides pour charger lesdites particules solides dans une enceinte, comprenant :
- une trémie (418) d'alimentation en particules solides, définissant un jeu d'au moins une ouverture (419) d'évacuation des particules hors de la trémie sous l'effet de la gravité,
- un organe tournant (421) et un organe moteur couplé audit organe tournant pour entrainer en rotation ledit organe tournant autour d'un axe de rotation (z) ayant une direction avec en conditions d'utilisation une composante suivant la direction du vecteur de gravité,
- en aval du jeu d'au moins une ouverture de la trémie d'alimentation, un jeu d'au moins un élément déflecteur (425), chaque élément déflecteur s'étendant suivant sa direction longitudinale entre une première (430) et une deuxième (432) extrémité, et étant porté par ledit organe tournant à sa première extrémité.
**caractérisé en ce que**
- au moins un élément déflecteur dudit jeu est rigide et monté pivotant sur l'organe tournant à sa première extrémité,
- le dispositif de distribution comprend en outre des moyens de déploiement (422) actionnables à distance agencés pour entrainer au moins un élément déflecteur monté pivotant sur l'organe tournant, de façon à le faire pivoter d'une position d'introduction dans l'enceinte, dans laquelle sa direction longitudinale forme un premier angle avec la direction de l'axe de rotation, à une position de déviation des particules, dans laquelle sa direction longitudinale forme un deuxième angle avec la direction de l'axe de rotation, le deuxième angle étant strictement supérieur au premier angle et imposé via les moyens de déploiement indépendamment de la vitesse de rotation dudit organe tournant.

2. Dispositif de distribution selon la revendication 1, dans lequel le dispositif de distribution est agencé pour que les moyens de déploiement soient aptes à retenir ledit au moins un élément déflecteur monté pivotant à au moins une position intermédiaire, chaque position intermédiaire correspondant à un angle strictement supérieur au premier angle et strictement inférieur au deuxième angle.

3. Dispositif de distribution selon l'une quelconque des revendications précédentes, dans lequel le jeu d'au moins un élément déflecteur comprend une pluralité d'éléments déflecteurs, ayant de préférence des longueurs différentes.

4. Dispositif de distribution selon la revendication précédente, dans lequel les moyens de déploiement sont conformés pour faire pivoter un ou plusieurs éléments déflecteurs indépendamment des autres éléments déflecteurs de ladite pluralité.

5. Dispositif de distribution selon l'une quelconque des revendications précédentes, dans lequel le deuxième angle est compris entre 45° et 100°, de préférence entre 60 et 95°, et plus préférentiellement entre 75° et 90°, ces valeurs étant incluses.

6. Dispositif de distribution selon l'une quelconque des revendications précédentes, dans lequel le jeu d'au moins un élément déflecteur est réparti de façon irrégulière autour de l'axe de rotation.

7. Dispositif de distribution selon la revendication précédente, dans lequel le jeu d'au moins un élément déflecteur est agencé de sorte que lorsque dressé par rapport à l'axe de rotation, les projections dudit jeu dans un plan normal à l'axe de rotation de l'organe tournant ont une distribution asymétrique autour dudit axe de rotation, avec au plus un plan de symétrie passant par l'axe de rotation.

8. Dispositif de distribution selon l'une quelconque des revendications précédentes, dans lequel les éléments déflecteurs sont répartis sur une plage angulaire de plus de 5° à moins de 320°, de préférence moins de 280°, plus préférentiellement moins de 180° et mieux encore moins de 120°.

9. Dispositif de distribution selon l'une quelconque des revendications précédentes, dans lequel les moyens de déploiement comprennent un organe de tringlerie (422) comprenant une première tige (423) s'étendant vers le haut de trémie en conditions d'utilisation, et au moins une deuxième tige (424), montée articulée par rapport à la première tige et coopérant avec au moins un élément déflecteur (425).

10. Dispositif de distribution l'une quelconque des revendications précédentes, dans lequel le premier angle est compris entre 0° et 20°, ces valeurs étant incluses.

11. Dispositif de distribution selon l'une quelconque des revendications précédentes, dans lequel le jeu d'au moins une ouverture de la trémie d'alimentation est conformé de façon asymétrique par rapport à l'axe de rotation, définissant au plus un plan de symétrie passant par l'axe de rotation.

12. Dispositif de distribution selon la revendication 11, dans lequel l'organe moteur est agencé pour que l'organe tournant (421) auquel il est couplé effectue un mouvement avec des variations de vitesse angulaire sur une plage angulaire de 360° ou moins.

13. Procédé d'installation d'un dispositif de distribution de particules solides tel que défini dans l'une quelconque des revendications 1 à 12 dans une enceinte définissant un orifice dans sa partie supérieure, comprenant
- faire passer par ledit orifice au moins l'organe tournant et le jeu d'au moins un élément déflecteur comprenant au moins un élément déflecteur rigide en position d'introduction dans l'enceinte, et
- actionner à distance les moyens de déploiement pour entrainer au moins un élément déflecteur monté pivotant sur l'organe tournant, de façon à le faire pivoter de la position d'introduction dans l'enceinte, à la position de déviation des particules.

14. Ensemble comprenant une enceinte, de préférence un réacteur catalytique, et un dispositif tel que défini dans l'une quelconque des revendications 1 à 12 avec l'organe tournant et le jeu d'au moins un élément déflecteur introduits dans l'enceinte.

15. Méthode de chargement de particules solides dans une enceinte possédant une ouverture dans sa partie supérieure, comprenant :
a) l'installation dans l'enceinte d'un dispositif de distribution (417) tel que défini dans l'une quelconque des revendications 1 à 12 via l'ouverture en partie supérieure de l'enceinte; puis
b) l'entrainement en rotation de l'organe tournant (421) dudit dispositif ; et
c) le chargement des particules en les introduisant dans la trémie d'alimentation (418) dudit dispositif tout en maintenant l'organe tournant en rotation.

16. Méthode selon la revendication 15, **caractérisée en ce que** l'organe tournant effectue un mouvement oscillant avec des inversions de sens de rotation aux extrémités d'une plage angulaire étendue sur 350° ou moins, de préférence 330° ou moins, plus préférentiellement 320° ou moins, mieux 310° ou moins, et mieux encore 270° ou moins.

## Patentansprüche

1. Verteilungsvorrichtung (417) für Feststoffpartikel zum Laden der Feststoffpartikel in ein Gehäuse, Folgendes umfassend:
- einen Versorgungstrichter (418) für Feststoffpartikel, der einen Satz aus mindestens einer Austragsöffnung (419) für die Partikel aus dem Trichter heraus unter der Wirkung der Schwerkraft definiert,
- ein Drehorgan (421) und ein Antriebsorgan, das mit dem Drehorgan gekoppelt ist, um das Drehorgan um eine Drehachse (z) herum in Rotation anzutreiben, die eine Richtung mit, unter Nutzungsbedingungen, einer Komponente entlang der Richtung des Schwerkraftvektors aufweist,
- stromabwärts des Satzes aus mindestens einer Öffnung des Versorgungstrichters, einen Satz aus mindestens einem Abweiserelement (425), wobei sich jedes Abweiserelement entlang seiner Längsrichtung zischen einem ersten (430) und einem zweiten (432) Ende erstreckt, und durch das Drehorgan an seinem ersten Ende getragen wird,
**dadurch gekennzeichnet, dass**
- mindestens ein Abweiserelement des Satzes starr ist, und schwenkbar auf dem Drehorgan an seinem ersten Ende angebracht ist,
- die Verteilungsvorrichtung weiter aus der Ferne betätigbare Entfaltungsmittel (422) umfasst, die angeordnet sind, um mindestens ein Abweiserelement anzutreiben, das schwenkbar auf dem Drehorgan angebracht ist, um es von einer Einführungsposition in das Gehäuse, in der seine Längsrichtung einen ersten Winkel mit der Richtung der Rotationsachse bildet, und einer Abweisungsposition der Partikel schwenken zu lassen, in der seine Längsrichtung einen zweiten Winkel mit der Richtung der Rotationsachse bildet, wobei der zweite Winkel streng größer als der erste Winkel ist, und über die Entfaltungsmittel unabhängig von der Rotationsgeschwindigkeit des Drehorgans aufgezwungen wird.

2. Verteilungsvorrichtung nach Anspruch 1, wobei die Verteilungsvorrichtung angeordnet ist, damit die Entfaltungsmittel imstande sind, das mindestens eine schwenkbar angebrachte Abweiserelement in mindestens einer Zwischenposition zu halten, wobei jede Zwischenposition einem Winkel entspricht, der streng größer als der erste Winkel, und streng kleiner als der zweite Winkel ist.

3. Verteilungsvorrichtung nach einem der vorstehenden Ansprüche, wobei der Satz aus mindestens einem Abweiserelement eine Vielzahl von Abweiserelementen umfasst, die vorzugsweise unterschiedliche Längen aufweisen.

4. Verteilungsvorrichtung nach dem vorstehenden Anspruch, wobei die Entfaltungsmittel ausgeformt sind, um ein oder mehrere Abweiserelemente unabhängig von den anderen Abweiserelementen der Vielzahl schwenken zu lassen.

5. Verteilungsvorrichtung nach einem der vorstehenden Ansprüche, wobei der zweite Winkel zwischen 45° und 100°, vorzugsweise zwischen 60 und 95° und bevorzugter zwischen 75° und 90° enthalten ist, wobei diese Werte inklusive sind.

6. Verteilungsvorrichtung nach einem der vorstehenden Ansprüche, wobei der Satz aus mindestens einem Abweiserelement in unregelmäßiger Form um die Rotationsachse herum verteilt ist.

7. Verteilungsvorrichtung nach dem vorstehenden Anspruch, wobei der Satz aus mindestens einem Abweiserelement derart angeordnet ist, dass wenn er in Bezug auf die Rotationsachse aufgerichtet ist, die Projektionen des Satzes in einer Ebene normal zur Rotationsachse des Drehorgans eine asymmetrische Verteilung um die Rotationsachse herum aufweisen, mit höchstens einer Symmetrieebene, die durch die Rotationsachse hindurch verläuft.

8. Verteilungsvorrichtung nach einem der vorstehenden Ansprüche, wobei die Abweiserelemente über einen Winkelbereich von mehr als 5° bis weniger als 320°, vorzugsweise weniger als 280°, bevorzugter weniger als 180° und noch besser weniger als 120° verteilt sind.

9. Verteilungsvorrichtung nach einem der vorstehenden Ansprüche, wobei die Entfaltungsmittel ein Gestängeorgan (422) umfassen, das einen ersten Schaft (423) umfasst, der sich unter Nutzungsbedingungen zur Oberseite des Trichters erstreckt, und mindestens einen zweiten Schaft (424), der in Bezug auf den ersten Schaft gelenkig angebracht ist und mit mindestens einem Abweiserelement (425) zusammenwirkt.

10. Verteilungsvorrichtung nach einem der vorstehenden Ansprüche, wobei der erste Winkel zwischen 0° und 20° enthalten ist, wobei diese Werte inklusive sind.

11. Verteilungsvorrichtung nach einem der vorstehenden Ansprüche, wobei der Satz aus mindestens einer Öffnung des Versorgungstrichters auf asymmetrische Weise in Bezug auf die Rotationsachse ausgeformt ist, wodurch höchstens eine Symmetrieebene definiert wird, durch die die Rotationsachse hindurch verläuft.

12. Verteilungsvorrichtung nach Anspruch 11, wobei das Antriebsorgan angeordnet ist, damit das Drehorgan (421), mit dem es gekoppelt ist, eine Bewegung mit Winkelgeschwindigkeitsvariationen über einen Winkelbereich von 360° oder weniger ausführt.

13. Verfahren zur Installation einer Verteilungsvorrichtung von Feststoffpartikeln nach einem der Ansprüche 1 bis 12, in einem Gehäuse, das in seinem Oberteil eine Öffnung definiert, Folgendes umfassend
- Durchführen lassen durch die Öffnung mindestens des Drehorgans und des Satzes aus mindestens einem Abweiserelement, mindestens ein starres Abweiserelement in einer Einführungsposition in das Gehäuse umfassend, und
- Betätigen aus der Ferne der Entfaltungsmittel zum Antreiben mindestens eines Abweiserelements, das schwenkbar auf dem Drehorgan angebracht ist, um es von der Einführungsposition in das Gehäuse in die Abweisungsposition der Partikel schwenken zu lassen.

14. Baugruppe, ein Gehäuse, vorzugsweise einen katalytischen Reaktor, und eine Vorrichtung nach einem der Ansprüche 1 bis 12 mit dem Drehorgan und dem Satz aus mindestens einem Abweiserelement umfassend, die in das Gehäuse eingeführt werden.

15. Verfahren zum Laden von Feststoffpartikeln in ein Gehäuse, das in seinem Oberteil eine Öffnung besitzt, Folgendes umfassend:
a) Installation in dem Gehäuse einer Verteilungsvorrichtung (417) nach einem der Ansprüche 1 bis 12 über die Öffnung im Oberteil des Gehäuses; danach
b) In Rotation antreiben des Drehorgans (421) der Vorrichtung;
und
c) Laden der Partikel durch deren Einführen in den Versorgungstrichter (418) der Vorrichtung unter Beibehaltung der Rotation des Drehorgans.

16. Verfahren nach Anspruch 15, **dadurch gekennzeichnet, dass** das Drehorgan eine Schwingbewegung mit Rotationsrichtungsumkehrungen an den Enden eines Winkelbereichs, der sich über 350° oder weniger, vorzugsweise 330° oder weniger, bevorzugter 320° oder weniger, besser 310° oder weniger und noch besser 270° oder weniger erstreckt.

## Claims

1. Device (417) for distributing solid particles for loading said solid particles in an enclosure, comprising:
- a hopper (418) for feeding solid particles, defining a set of at least one opening (419) for discharging particles out of the hopper under the effect of gravity,
- a rotating member (421) and a drive member coupled to said rotating member for rotating said rotating member about a rotation axis (z) having a direction with, under conditions of use, a component in the direction of the gravity vector,
- downstream of this set of at least one opening of the feed hopper, a set of at least one deflector element (425), each deflector element extending in its longitudinal direction between a first (430) and a second (432) end, and being carried by said rotating member at the first end thereof,
**characterised in that**
- at least one deflector element of said set is rigid and mounted so as to pivot on the rotating member at the first end thereof,
- the distribution device further comprises remotely actuatable deployment means (422) arranged to drive at least one deflector element mounted so as to pivot on the rotating member, so as to pivot it from a position of introduction into the enclosure, wherein the longitudinal direction thereof forms a first angle with the direction of the rotation axis, to a position of deflection of the particles, wherein the longitudinal direction thereof forms a second angle with the direction of the rotation axis, the second angle being strictly greater than the first angle and imposed via the deployment means independently of the rotation speed of said rotating member.

2. Distribution device according to claim 1, wherein the distribution device is arranged so that the deployment means are able to hold said at least one pivotally mounted deflector element at at least one intermediate position, each intermediate position corresponding to an angle strictly larger than the first angle and strictly smaller than the second angle.

3. Distribution device according to any one of the preceding claims, wherein the set of at least one deflector element comprises a plurality of deflector elements, preferably having different lengths.

4. Distribution device according to the preceding claim, wherein the deployment means are conformed so as to pivot one or more deflector elements independently of the other deflector elements in said plurality.

5. Distribution device according to any one of the preceding claims, wherein the second angle is between 45° and 100°, preferably between 60 and 95°, and more preferentially between 75° and 90°, these values being inclusive.

6. Distribution device according to any one of the preceding claims, wherein the set of at least one deflector element is distributed irregularly around the rotation axis.

7. Distribution device according to the preceding claim, wherein the set of at least one deflector element is arranged so that, when erect with respect to the rotation axis, the projections of said set in a plane normal to the rotation axis of the rotating member have an asymmetric distribution around said rotation axis, with at the most one plane of symmetry passing through the rotation axis.

8. Distribution device according to any one of the preceding claims, wherein the deflector elements are distributed over an angular range of more than 5° to less than 320°, preferably less than 280°, more preferentially less than 180° and even better less than 120°.

9. Distribution device according to any one of the preceding claims, wherein the deployment means comprise a linkage member (422) comprising a first rod (423) extending towards the top of the hopper under conditions of use, and at least one second rod (424), mounted articulated with respect to the first rod and cooperating with at least one deflector element (425).

10. Distribution device according to any one of the preceding claims, wherein the first angle is between 0° and 20°, these values being inclusive.

11. Distribution device according to any one of the preceding claims, wherein the set of at least one opening of the feed hopper is conformed asymmetrically with respect to the rotation axis, defining at most a plane of symmetry passing through the rotation axis.

12. Distribution device according to claim 11, wherein the drive member is arranged so that the rotating member (421) to which it is coupled makes a movement with angular speed variations over an angular range of 360° or less.

13. Method for installing a device for distributing solid particles as defined in any one of claims 1 to 12 in an enclosure having an orifice in the upper part thereof, comprising
- passing, through said orifice, at least the rotating member and the set of at least one deflector element comprising at least one deflector element that is rigid in the position of introduction into the enclosure, and
- remotely actuating the deployment means to drive at least one deflector element mounted pivotally on the rotating member, so as to pivot it from the position of introduction into the enclosure to the position of deflection of the particles.

14. Assembly comprising an enclosure, preferably a catalytic reactor, and a device as defined in any one of claims 1 to 12 with the rotating member and the set of at least one deflector element introduced into the enclosure.

15. Method for loading solid particles into an enclosure having an opening in the upper part thereof, comprising:
a) installing in the enclosure a distribution device (417) as defined in any one of claims 1 to 12 via the opening in the upper part of the enclosure; then
b) rotating the rotating member (421) of said device; and
c) loading the particles by introducing them into the feed hopper (418) of said device while maintaining the rotating member in rotation.

16. Method according to claim 15, **characterised in that** the rotating member makes an oscillating movement with reversals of rotation directions at the ends of an angular range extending over 350° or less, preferably 330° or less, more preferentially 320° or less, better 310° or less, and even better 270° or less.
